Europäisches Patentamt

European Patent Office

Office européen des brevets

(19)

(11) Numéro de publication: **0 142 062**
**B1**

(12) FASCICULE DE BREVET EUROPEEN

(45) Date de publication du fascicule du brevet:
01.06.88

(51) Int. Cl.⁴: **C 03 B 37/14**

(21) Numéro de dépôt: **84112549.5**

(22) Date de dépôt: **18.10.84**

(54) **Machine automatique de soudage en bout de deux fibres optiques.**

(30) Priorité: 24.10.83 FR 8316889
20.04.84 FR 8406300

(43) Date de publication de la demande:
22.05.85 Bulletin 85/21

(45) Mention de la délivrance du brevet:
01.06.88 Bulletin 88/22

(84) Etats contractants désignés:
DE FR GB IT

(56) Documents cités:
PATENT ABSTRACTS OF JAPAN, vol. 5, no.
88(P-65)(760), 9 juin 1981

(73) Titulaire: COMPAGNIE LYONNAISE DE
TRANSMISSIONS OPTIQUES Société anonyme dite:,
170, Quai de Clichy, F-92111 Clichy (FR)

(72) Inventeur: Hakoun, Roland, 15, rue François Bonvin,
F-75015 Paris (FR)
Inventeur: Jurczyszyn, Michel, 68, rue Gabriel Péri,
F-94200 Ivry Sur Seine (FR)

(74) Mandataire: Weinmiller, Jürgen et al,
Lennéstrasse 9 Postfach 24, D-8133 Feldafing (DE)

## Description

La présente invention concerne une machine automatique de soudage en bout de deux fibres optiques, comprenant une platine support d'une première fibre dite «de référence», une platine support d'une seconde fibre, dite «fibre mobile», munie de moyens de translation suivant deux directions horizontale et verticale dans un plan perpendiculaire aux axes des fibres, des moyens de translation motorisée de la platine-support de la seconde fibre, et mécanique de l'autre, parallèlement aux axes des fibres, des sources lumineuses éclairant les extrémités des fibres, des moyens de détection de position dans l'espace des extrémités de fibres, des organes de commande pour corriger les positions de la fibre mobile suivant l'horizontale et suivant la verticale, et des moyens pour amener en contact bout à bout les extrémités des fibres pour souder ces extrémités. Une telle machine est connue du document JP-A-56-35112.

On a déjà proposé dans le document US-A-3 960 531 une machine comprenant une première platine de support d'une première fibre optique, munie de moyens de translation parallèle à l'axe de la fibre, une seconde platine de support d'une seconde fibre optique, munie de moyens de translation selon un axe vertical et un axe horizontal perpendiculaire à l'axe des fibres, d'un microscope pour observer les extrémités des fibres optiques pendant que l'on aligne leurs axes par déplacements manuels des platines, une cale mobile de repérage d'un plan de soudage, par butée sur cette cale de l'extrémité de l'une des fibres, et deux électrodes de soudage des extrémités des fibres dans le plan de soudage.

Une telle machine peut convenir pour le soudage en bout de fibres optiques lorsque l'on ne requiert pas une grande précision, dans le cas de fibres multimodes, dont le cœur a une diamètre de l'ordre de 100 microns.

Elle ne convient plus lorsque l'on veut souder les extrémités des fibres avec une précision réduisant au minimum les pertes de lumière dues à la soudure, et ne peut en tout cas convenir pour le soudage de fibres monomodes, dont le cœur a un diamètre de l'ordre de quelques microns.

On a proposé dans research disclosure, avril 1982, n° 21643, une machine automatique de positionnement de fibres optiques, notamment en vue de leur soudage, suivant 3 axes orthogonaux, à l'aide d'une caméra de télévision commandant un microprocesseur. Une telle machine est cependant très complexe et coûteuse.

On a aussi proposé dans le document Patent Abstracts of Japan, vol. 5, n° 88, p. 65 (760), 9 juin 1981, JP-1-56-35112 une machine comprenant des platines de support des extrémités de deux fibres à souder en bout, une source de rayonnements lasers dirigée obliquement vers les extrémités des fibres, des récepteurs des diagrammes de diffraction des faisceaux lasers transmis à travers les extrémités des fibres, un ordinateur relié à ces récepteurs, commandant un micromoteur de centrage fin de ces extrémités face à face, une autre source de rayonnement laser pour assurer la fusion de ces extrémités.

Une telle machine nécessite un réglage initial complexe par un opérateur très qualifié en fonction des diagrammes de diffraction observés sur les extrémités des fibres suivant leurs positions.

La présente invention a pour but de procurer une machine automatique de soudage en bout des extrémités de fibres optiques, qui permette d'aligner avec une grande précision, de l'ordre du ¹⁄₁₀ de micron, les axes des fibres, et également d'effectuer le soudage des extrémités des fibres sans apparitions de défauts dans la zone de soudage. Elle a encore pour but d'assurer un positionnement très rapide des fibres, sans nécessiter de dextérité de l'opérateur, et un contrôle précis de chauffage des extrémités des fibres pendant leur soudage, ainsi que la possibilité de reproduire à volonté divers cycles de soudage.

La machine de type specifié ci-dessus est selon l'invention caractérisée en ce qu'elle comprend en outre des moyens de visualisation à fort grossissement pour observer les extrémités des fibres, en ce que les moyens de détection comprennent un couple de photodétecteurs pour capter la position des fibres suivant une direction horizontale, un couple de photodétecteurs pour capter la position des fibres suivant une direction verticale, et en sortie de ces photodétecteurs des comparateurs électroniques pour comparer les indications des photodétecteurs de chaque couple, et en ce que les organes de commande en corrigent les positions de la fibre mobile suivant l'horizontale et suivant la verticale en fonction des indications de chaque couple de photodétecteurs, et des moyens pour souder les extrémités des fibres à l'aide d'un arc électrique.

Elle répond en outre de préférence à au moins l'une des caractéristiques suivantes:

– Les moyens de détection des extrémités des fibres comprennent un système de grandissement optique de l'objet disposé de l'autre côté des fibres par rapport à des sources lumineuses, et des photodétecteurs disposés aux points images des fibres optiques au-delà du dispositif de grandissement qui leur est commun.

– Les comparateurs électroniques sont reliés aux organes de commande par l'intermédiaire d'un microprocesseur.

– Les moyens pour amener en contact bout à bout les extrémités des fibres sont reliés à la platine-support de la fibre mobile.

Pour permettre de vérifier que le chargement des fibres est correctement réalisé sur les platines supports, un afficheur à matrice de diodes électroluminescentes représentatives des tensions électriques enregistrées sur les capteurs photosensibles, permet de visualiser la position des fibres. Chaque diode représente une coordonnée de l'espace. La discrimination entre les fibres est réalisée en affectant un point lumineux fixe à la fibre référence et un point lumineux clignotant à la fibre dite asservie. L'alignement des fibres correspond à la superposition des points lumineux fixe et clignotant, en n'importe quel point de la matrice.

– Les moyens pour amener en contact les extrémités des fibres sont constitués par un moteur pas-à-pas de haute résolution.

— Elle comporte en outre des moyens pour faire reculer la fibre mobile de quelques diziêmes de micron une fois qu'elle est entrée en contact bout à bout avec la fibre fixe.

— Les moyens pour faire reculer la fibre mobile sont commandés par une instruction stockée dans le microprocesseur.

— La platine support de la fibre mobile est fixée à l'extrémité d'une barre de flexion munie en un lieu intermédiaire d'une bille en matériau très dur sur laquelle s'appliquent des cales à lames piézoélectriques précontraignant la barre de flexion, commandées par les indications des photodétecteurs et exerçant des pressions sur la bille dans les sens vertical et horizontal.

— Les moyens pour souder les extrémités de fibres comprenant des électrodes de soudage à l'arc électrique en tungstène à revêtement de platine.

— Elle comporte des moyens pour préchauffer les extrémités des fibres, alignées mais encore écartées l'une de l'autre, de façon à polir les faces qui viendront en contact.

— La machine comporte un système optique condenseur de lumière associé à chaque photodétecteur pour diriger sur celui-ci le faisceau lumineux destiné à détecter la position de l'une des fibres optiques dans l'une des directions horizontale et verticale.

— La machine comporte une source lumineuse unique éclairant les extrémités des deux fibres optiques.

— Chaque photodétecteur comprend deux moitiés accolées, dont chacune est reliée à l'entrée d'un comparateur électronique, commandant le réglage de positionnement de l'une des fibres. Chacun de ces comparateurs électroniques est lui-même relié de préférence à un comparateur électronique commun commandant le réglage de positionnement des deux fibres optiques.

Il est décrit ci-après, à titre d'exemple et en référence aux figures du dessin annexé, une machine automatique de soudage en bout de deux fibres optiques monomodes et divers dispositifs de visualisation pour observer les extrémités des deux fibres optiques et détecter leur défaut d'alignement dans un plan horizontal.

On comprendra que des dispositifs analogues de visualisation et de détection des défauts d'alignement dans un plan vertical doivent leur être adjoints pour permettre la mise en alignement des fibres optiques à souder.

La figure 1 représente schématiquement en perspective la machine, les platines supports des fibres, et les photodétecteurs et les organes de positionnement de la fibre mobile.

La figure 2 représente schématiquement le dispositif de lecture optoélectronique de position des extrémités des fibres permettant ensuite d'amener l'axe de la fibre mobile dans le prolongement de celui de la fibre fixe.

La figure 3 représente en perspective une barre de flexion munie à son extrémité avant de la platine support de la fibre mobile, avec une bille en matériau dur d'application des pressions piézoélectriques de réglage du positionnement de la fibre mobile.

La figure 4 représente un dispositif à source d'éclairage unique, deux systèmes optiques condenseur de lumière et photodétecteurs simples.

La figure 5 représente un dispositif à source d'éclairage unique, un seul système optique condenseur de lumière et photodétecteurs simples.

La figure 6 représente un dispositif à source d'éclairage unique, un seul système optique condenseur de lumière, et avec des photodétecteurs comportant deux moitiés accolées, et des comparateurs électroniques reliés à un comparateur commun, permettant le réglage de la position des deux fibres optiques.

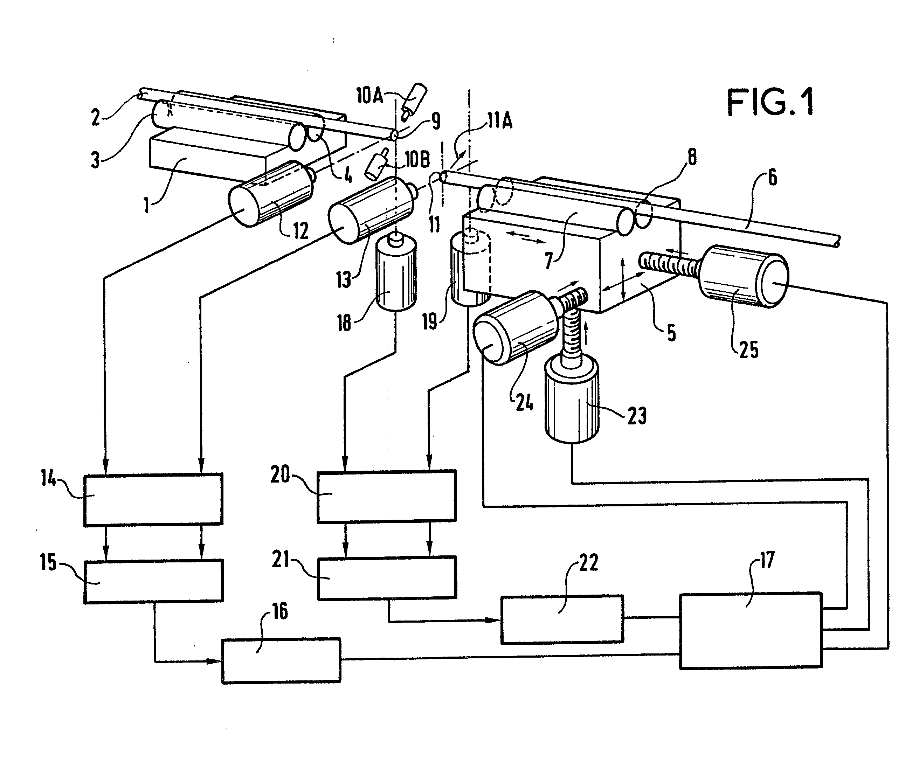

Dans la figure 1, la platine 1 forme support pour la fibre optique dite «fixe» 2, supportée par les deux tiges métalliques cylindriques adjacentes 3 et 4, serties dans des gorges de la platine. La platine 5 forme support pour la fibre optique dite «mobile» 6, supportée de la même manière par les deux tiges métalliques cylindriques 7 et 8, disposées dans des gorges de cette platine. Les fibres 2 et 6 sont immobilisées sur leurs platines à l'aide de pinces, non représentées.

La face d'extrémité 9 de la fibre 2 est amenée par réglage de la position de la platine 1 à l'aide d'un barillet à molette filetée de réglage, non représenté, dans le plan des électrodes de soudage 10A, 10B. Celles-ci sont de préférence en tungstène thorié dont la surface est revêtue de platine, pour éviter leur corrosion.

La face d'extrémité 11 de la fibre mobile est initialement décalée latéralement et en hauteur par rapport à celle de la fibre fixe, comme représenté par la flèche 11A, suite au chargement sans grande précision des fibres dans les pinces.

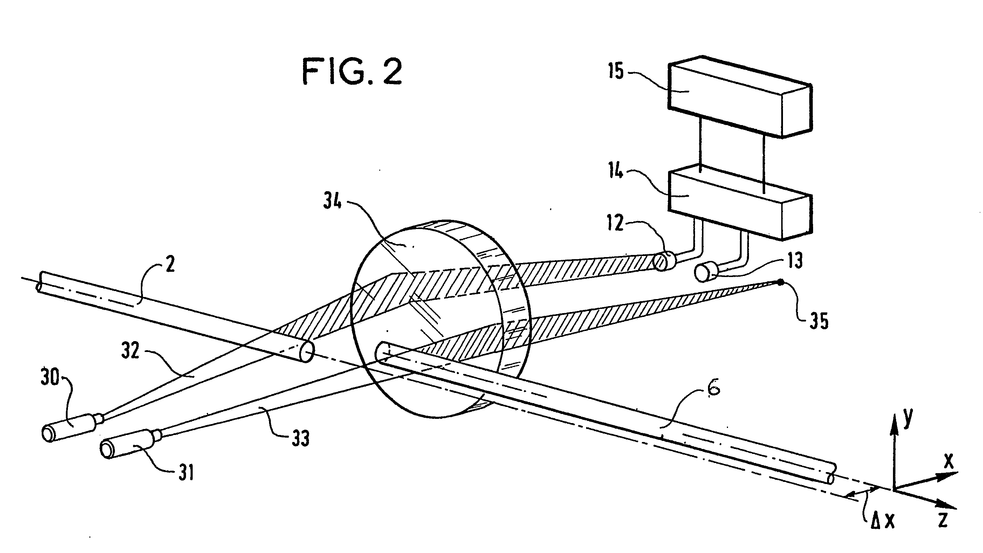

La détection des positions de la fibre mobile 6 et de la fibre de référence 2 s'effectue à l'aide des deux capteurs optiques 12, 13 pour optimisée le réglage horizontal futur et de deux capteurs optiques 18, 19 pour optimisée le réglage vertical, comme il sera expliqué plus loin en référence à la figure 2.

Les indications des capteurs optiques 12 et 13, recevant des faisceaux lumineux non représentés en figure 1, sont transformées en signaux électriques différentiels par le photo-récepteur 14. Ceux-ci sont comparés dans le comparateur 15, qui engendre un signal d'erreur, qui est transmis après amplification dans l'amplificateur 16 au microprocesseur 17.

De la même manière, les indications des capteurs optiques 18 et 19 sont transformées par le photo-récepteur 20 en signaux électriques, qui sont comparés dans le comparateur 21. Ce dernier envoie un signal d'erreur au microprocesseur 17 par l'intermédiaire de l'amplificateur 22.

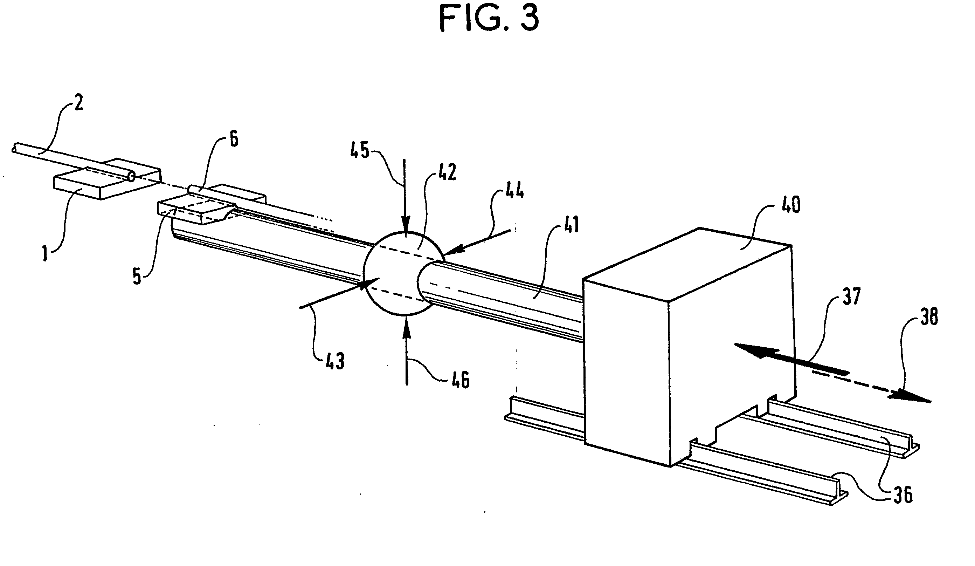

Le microprocesseur 17 engendre sur la base des indications provenant des capteurs optiques des ordres de correction de la position de la platine 5, support de la fibre mobile 6. Un premier ordre de correction est envoyé à une organe moteur 23, qui déplace la platine dans un plan vertical, et un second ordre de correction à un organe moteur 24, qui déplace la platine dans un plan horizontal. Ces organes moteurs sont par exemple des lames piézoélectriques, dont le rôle sera décrit plus loin en référence à la figure 3.

Le microprocesseur 17 commande en outre, une fois le positionnement correct de la fibre mobile obtenu, une séquence d'approche de l'extrémité 11 de la fibre mobile 6 solidaire de la platine 5, jusqu'au contact de l'extrémité 9 de la fibre de référence 2. Les capteurs enregistrent alors le tout premier fléchissement des fibres dès leur contact, définissant le plan de joint des fibres, puis un faible retrait de la fibre mobile et la procédure de soudage à l'aide d'un organe moteur 25.

La figure 2 représente schématiquement avec plus de précision comment s'effectue le réglage pour deux capteurs tels que 12 et 13. Les sources d'éclairage 30, 31 dirigent deux faisceaux, l'un 32 vers l'extrémité de la fibre de référence 2, l'autre 33 vers l'extrémité de la fibre mobile 6. Les faisceaux, sur lesquels une zone très proche des extrémités des fibres forme une ombre projetée, sont grandis par un même système de lentilles optiques 34 vers les points images de l'objet, où se trouvent les capteurs optiques 12 et 13. Chaque capteur est constitué de deux surfaces rectangulaires photosensibles adjacentes. La zone d'ombre définie par l'image de la fibre vient obscurcir partiellement chacune des deux surfaces, mettant en évidence l'inégalité de recouvrement des surfaces sensibles, traduisant cette coordonnée par des tensions électriques. Lorsque l'axe de la fibre mobile 6 n'est pas dans le même plan horizontal que celui de la fibre de référence 2, l'ombre de la fibre mobile se décale d'une même quantité sur les surfaces sensibles des capteurs.

De la même manière, les deux autres capteurs 18 et 19 (figure 1) enregistrent le décalage vertical entre les deux fibres 2 et 6 et transmettent leur indication au microprocesseur 17. Celui-ci envoie alors des instructions de commande aux organes moteurs 23 et 24.

Le réglage des positions de la fibre mobile 6 dans des plans horizontaux et verticaux passant par l'axe de la fibre de référence 2 (axes Ox et Oy de la figure 2), puis son déplacement jusqu'à la mise en contact des faces d'extrémité des deux fibres (axe Oz) s'effectuent grâce à la barre de flexion 41 (figure 3), encastrée dans un bloc 40, et munie d'une bille sphérique d'application des efforts de réglage 42. La bille 42, en matériau dur tel que du rubis synthétique, est en contact avec deux couples de cales piézoélectriques, représentées schématiquement par les flèches 43, 44 et 45, 46. Les cales 43, 44 dans le plan équatorial de la bille 42, assurent le déplacement de la fibre mobile dans un plan horizontal, et les cales 45, 46 dans son plan méridien passant par l'axe de la barre de flexion, assurant son déplacement dans un plan vertical. Ces cales piézoélectriques pourraient éventuellement être remplacées par des micro-moteurs.

Bien que ces déplacements ne soient pas rigoureusement des translations, on comprendra qu'ils peuvent leur être assimilés en pratique, étant donné la longueur du bras de levier.

Ces déplacements sont commandés par le microprocesseur 17.

Le déplacement du bloc 40 sur des rails 36 à chemins de billes, entraînant celui de la platine 5 et de la fibre mobile 6 qu'elle supporte, est assuré par un micromoteur pas à pas de haute résolution, non représenté, dans les deux sens, représentés par les flèches 37, 38.

Lorsque l'extrémité de la fibre mobile 6 vient en butée sur celle de la fibre de référence, la pression qu'elle exerce sur l'autre fibre entraîne un certain déplacement latéral de ces extrémités suivantes les axes Ox et Oy. Ce déplacement latéral, enregistré par les capteurs optiques, est transmis au microprocesseur 17, qui mémorise le dernier pas d'avance avant flexion des fibres. Ce dernier envoie alors l'instruction d'un léger retrait (quelques dizièmes de micron) au micromoteur, puis déclenche le cycle de soudage des extrémités des fibres.

Le cycle de soudage comporte une première opération de chauffage en-dessous du point de fusion du matériau des fibres optiques, pour arrondir les bords de leurs extrémités et éviter ainsi l'inclusion de bulles d'air à l'interface au cours du soudage proprement dit. Ce chauffage peut s'effectuer à l'aide d'un laser à anhydride carbonique.

Ce préchauffage est suivi d'un bref arrêt, puis du soudage proprement dit, portant les extrémités des fibres au-dessus de leur température de fusion. Le cycle est également commandé par le microprocesseur. On pourrait aussi effectuer manuellement le soudage.

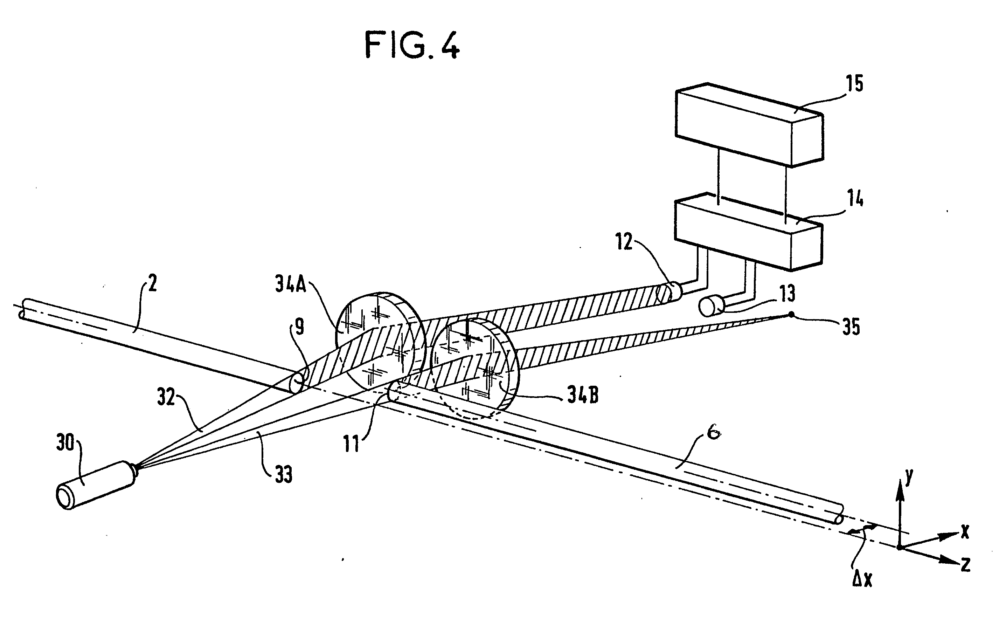

Dans la figure 4, la source d'éclairage 30 dirige deux pinceaux lumineux, représentés schématiquement en 32 et 33, vers les extrémités des fibres 2 et 6. L'axe de la fibre 6 est décalé dans un plan horizontal par rapport à celui de la fibre 2 d'un écart x. Ces pinceaux sont dirigés par les systèmes de lentilles optiques 34A, 34B vers le photodétecteurs 12, 13. La fibre optique dite «de référence» 2 étant correctement placée, le pinceau lumineux 32 éclaire la surface du photodétecteur 12, à par l'ombre portée de l'extrémité de la fibre 2. La fibre dite «mobile» 6 étant désaxée par rapport à la fibre 2, le pinceau lumineux 33 forme une tache lumineuse 35 hors du photodétecteur 13 (il pourrait aussi si la position de la fibre 6 était plus proche de l'alignement ne parvenir que sur une partie de la surface de ce photodétecteur). Les indications des photodétecteurs 12 et 13 sont transformées en signaux électriques différentiels par le photorécepteur 14. Ceux-ci sont comparés dans le comparateur 15, qui engendre un signal d'erreur, lequel est transmis après amplification au microprocesseur 17 (figure 1) commandant le déplacement du support de la fibre 6 dans un plan horizontal pour l'amener à l'alignement avec la fibre 2, comme décrit ci-dessus.

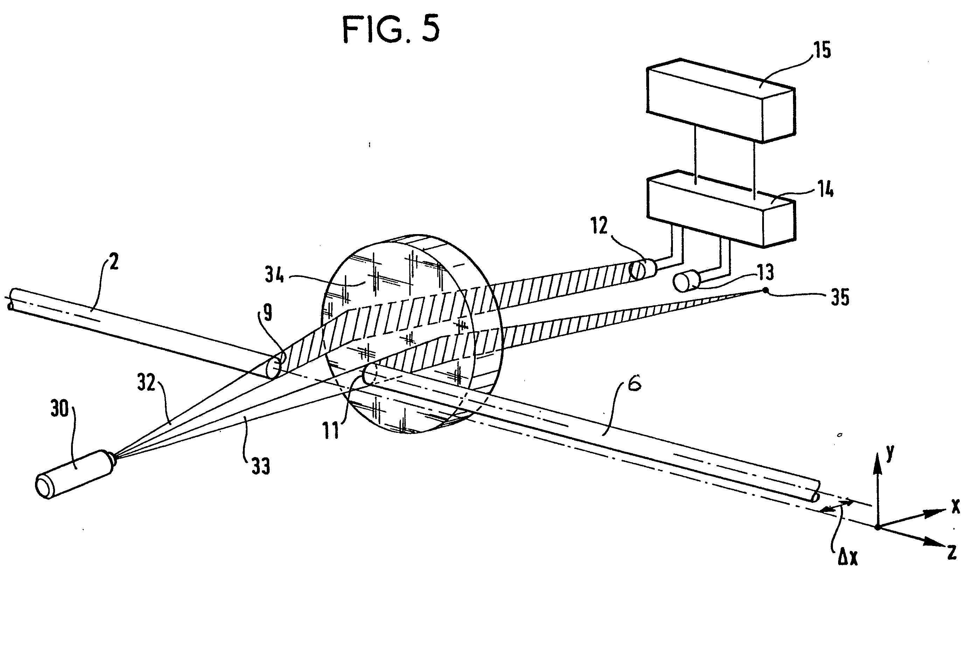

Le dispositif représenté en figure 5 est analogue à celui de la figure 4, mais il ne comporte qu'un seul système de lentilles optiques 34, qui dirige les pinceaux lumineux issus de la source 30 vers les photodétecteurs 12 et 13.

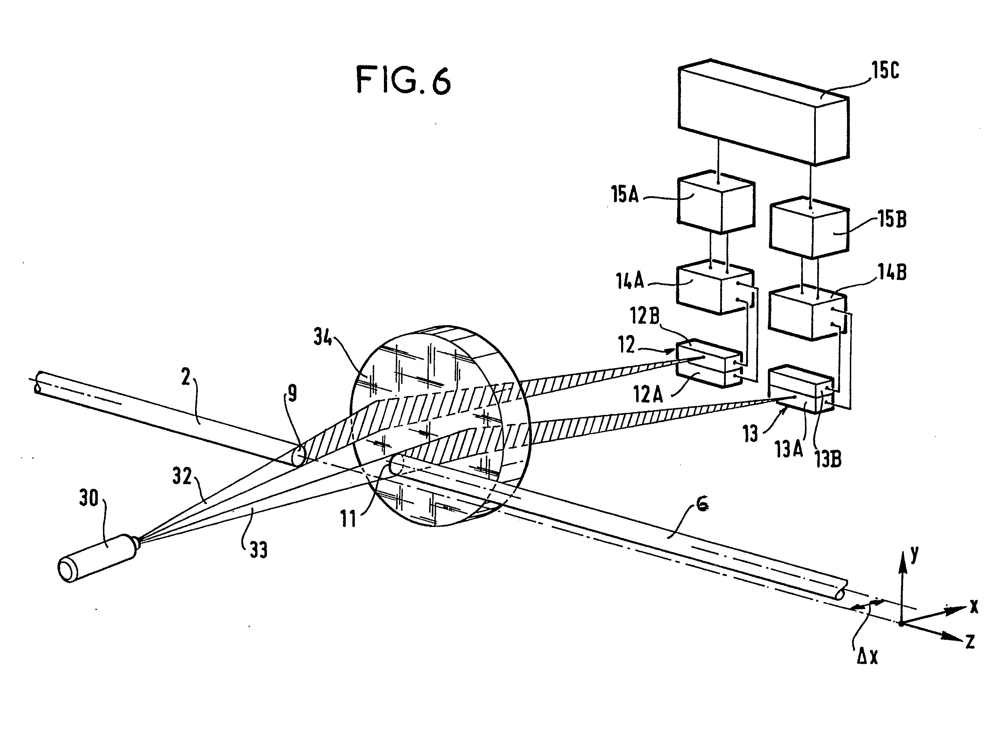

Le dispositif préféré de mise en œuvre de l'invention représenté en figure 6 est analogue à celui de la figure 5, mais les photodétecteurs 12 et 13 sont doubles. Chacun d'eux est divisé en deux moitiés accolées 12A, 12B, 13A, 13B. Il existe cette fois un photorécepteur et un comparateur par fibre, 14A, 15A pour la fibre 2, 14B, 15B pour la fibre 6, chacun des comparateurs détectant l'inégalité d'éclairement entre les deux plages 12A, 12B ou 13A, 13B. Les indications des deux comparateurs 15A, 15B sont combinées dans un comparateur 15C, lequel contrôle le dispositif de positionnement automatique.

Si une fibre optique 6 est écartée de la position établie par la fibre 2, dite de déférence, lors de son chargement, son ombre ne se répartit pas de la même façon sur les deux moitiés du photodétecteur correspondant. Une moitié est plus éclairée que l'autre et il en résulte un signal qui ne dépend que des coordonnées de la fibre 6 correspondante. Il est donc possible de régler indépendamment la position de cette fibre 5 par rapport à une position correspondant à l'autre fibre 2, en la déplaçant par pilotage automatique jusqu'à l'obtention du même signal que celui qui correspond aux coordonnées de l'autre fibre, dite de référence.

Ce dernier dispositif est plus précis et plus sensible que celui à un photodétecteur simple par fibre optique, puisque chaque détecteur double constitue en lui-même un système différentiel peu sensible à la valeur du rapport surface de l'image/surface active.

On comprendra que les variantes du dispositif de visualisation et de détection décrites ci-dessus peuvent se combiner de différentes manières. Ainsi, le dispositif à photodétecteurs doubles peut également s'utiliser avec deux sources d'éclairage, ou bien avec deux systèmes de lentilles optiques. On peut aussi utiliser deux sources d'éclairage avec deux systèmes optiques condenseurs de lumière.

**Revendications**

1. Machine automatique de soudage en bout de deux fibres optiques, comprenant une platine (1) support d'une première fibre (2) dite «de référence», une platine (5) support d'une seconde fibre (6), dite «fibre mobile», munie de moyens de translation suivant deux directions horizontale et verticale dans un plan perpendiculaire aux axes des fibres, des moyens de translation motorisée de la platine support de la seconde fibre, et mécanique de l'autre, parallèlement aux axes des fibres, des sources lumineuses (30, 31 figure 2) éclairant les extrémités (9, 11) des fibres, des moyens de détection de position dans l'espace des extrémités des fibres, des organes de commande pour corriger les positions de la fibre mobile suivant l'horizontale et suivant la verticale, des moyens pour amener en contact bout à bout les extrémités des fibres et des moyens pour souder ces extrémités caractérisées en ce que les moyens de détection comprennent un couple de photodétecteurs (12, 13) pour capter la position des fibres suivant une direction horizontale, un couple de photodétecteurs (18, 19) pour capter la position des fibres suivant une direction verticale, et en sortie de ces photodétecteurs des comparateurs électroniques (15, 21) pour comparer les indications des photodétecteurs de chaque couple, en ce que les organes de commande (17, 23, 24) corrigent les positions de la fibre mobile suivant l'horizontale et suivant la verticale en fonction des indications de chaque couple de photodétecteurs, et en ce que les moyens pour souder les extrémités des fibres comprennent un arc électrique.

2. Machine selon la revendication 1, caractérisée en ce que les moyens de détection des extrémités des fibres comprennent un système de grandissement optique de l'objet (34, figure 2) disposé de l'autre côté des fibres par rapport à des sources lumineuses (30, 31) et des photodétecteurs (12, 13) disposés aux points images des fibres optiques au-delà du dispositif de grandissement optique qui leur est commun.

3. Machine selon les revendications 1 ou 2, caractérisée en ce que les comparateurs électroniques sont reliés aux organes de commande par l'intermédiaire d'un microprocesseur (17).

4. Machine selon l'une des revendications 1 à 3, caractérisée en ce que les comparateurs actionnent des diodes électroluminescentes.

5. Machine selon l'une des revendications 1 à 4, caractérisée en ce que les moyens pour amener en contact bout à bout les extrémités des fibres sont reliés à la platine support de la fibre mobile.

6. Machine selon l'une des revendications 1 à 5, caractérisée en ce que les moyens pour amener en contact les extrémités des fibres sont constitués par un moteur pas-à-pas de haute résolution.

7. Machine selon l'une des revendications 1 à 6, caractérisée en ce qu'elle comporte en outre des moyens pour faire reculer la fibre mobile de quelques dizièmes de micron une fois qu'elle est entrée en contact bout à bout avec la fibre fixe.

8. Machine selon les revendications 3 et 7, caractérisée en ce que les moyens pour faire reculer la fibre mobile sont commandés par une instruction stockée dans le microprocesseur.

9. Machine selon l'une des revendications 1 à 8, caractérisée en ce que la platine-support de la fibre mobile est fixée à l'extrémité d'une barre de flexion munie en un lieu intermédiaire d'une bille en matériau très dur sur laquelle s'appliquent des cales à lames piézoélectriques précontraignant la barre de flexion et commandées par les indications des photodétecteurs et exerçant des pressions sur la bille dans les sens vertical et horizontal.

10. Machine selon l'une des revendications 1 à 9, caractérisée en ce que les moyens pour souder les extrémités des fibres comprennent des électrodes de soudage à l'arc électrique en tungstène à revêtement de platine.

11. Machine selon l'une des revendications 1 à 10, caractérisée en ce qu'elle comporte des moyens pour préchauffer les extrémités des fibres alignées mais encore écartées l'une de l'autre, de façon à polir les faces qui viendront en contact.

12. Machine selon la revendication 1, caractérisée en ce qu'elle comporte un système optique condenseur de lumière (34A, 34B, figure 1) associé à chaque photodétecteur pour diriger sur celui-ci le faisceau lumineux (32, 33) destiné à détecter la position de l'une des fibres optiques dans l'une des directions horizontale et verticale.

13. Machine selon la revendication 1, caractérisée en ce qu'elle comporte une source lumineuse unique (30) éclairant les extrémités des deux fibres optiques.

14. Machine selon la revendication 1, caractérisée en ce que chaque photodétecteur comprend deux moitiés accolées (12A, 12B, 13A, 13B), dont chacune est reliée à une entrée d'un comparateur électronique (15A, 15B) commandant le réglage du positionnement de l'une des fibres.

15. Machine selon la revendication 14, caractérisée en ce que chacun des comparateurs électroniques (15A, 15B) est relié à un comparateur électronique commun (15C) commandant le réglage de positionnement des deux fibres.

## Patentansprüche

1. Automatische Maschine zum Verschweißen der Enden zweier optischer Fasern, mit einer Trageplatte (1) für eine erste Faser (2), genannt «Bezugsfaser», einer Trageplatte (5) für eine zweite Faser (6), genannt «bewegliche Faser», mit Mitteln zur Translation in zwei Richtungen, horizontal und vertikal in einer zu den Faserachsen senkrechten Ebene, mit motorgetriebenen Mitteln für die Translation einer der Trageplatten und mit Mitteln zur mechanischen Translation der anderen Trageplatte parallel zu den Faserachsen, mit Mitteln (30, 31, Fig. 2) zur Beleuchtung der Faserenden (9, 11), mit Mitteln zur Positionserfassung der Faserenden im Raum, mit Steuerorganen zur Positionskorrektur der beweglichen Faser in der Waagerechten und der Senkrechten, mit Mitteln, um die Faserenden stirnseitig in Berührung zu bringen, und mit Mitteln zum Verschweißen der Enden, dadurch gekennzeichnet, daß die Erfassungsmittel ein Paar von Fotodetektoren (12, 13) zur Erfassung der Faserstellung in einer waagerechten Richtung, ein Paar von Fotodetektoren (18, 19) zur Erfassung der Faserstellung in einer senkrechten Richtung und elektronische Komparatoren (15, 21) am Ausgang der Fotodetektoren für den Vergleich der Angaben der Fotodetektoren jedes Paares aufweisen, daß die Steuermittel (17, 23, 24) die Position der beweglichen Faser in der Waagerechten und Senkrechten in Abhängigkeit von den Angaben jedes Fotodetektorpaars korrigieren und daß die Mittel zum Verschweißen der Faserenden einen elektrischen Lichtbogen aufweisen.

2. Maschine nach Anspruch 1, dadurch gekennzeichnet, daß die Mittel zur Erfassung der Faserenden ein System zur optischen Vergrößerung (34, Fig. 2) des Objekts, das in bezug auf die Lichtquellen (30, 31) auf der anderen Seite der Fasern angeordnet ist, sowie Fotodetektoren (12, 13) aufweisen, die in den Bildpunkten der optischen Fasern jenseits des beiden gemeinsamen optischen Vergrösserungssystems angeordnet sind.

3. Maschine nach einem der Ansprüche 1 oder 2, dadurch gekennzeichnet, daß die elektronischen Komparatoren mit den Steuermitteln über einen Mikroprozessor (17) verbunden sind.

4. Maschine nach einem der Ansprüche 1 bis 3, dadurch gekennzeichnet, daß die Komparatoren auf Elektrolumineszenzdioden einwirken.

5. Maschine nach einem der Ansprüche 1 bis 4, dadurch gekennzeichnet, daß die Mittel, mit denen die Faserenden stirnseitig in Berührung gebracht werden, mit der Trageplatte der beweglichen Faser verbunden sind.

6. Maschine nach einem der Ansprüche 1 bis 5, dadurch gekennzeichnet, daß die Mittel, mit denen die Faserenden in Berührung gebracht werden, aus einem Schrittmotor hoher Auflösung bestehen.

7. Maschine nach einem der Ansprüche 1 bis 6, dadurch gekennzeichnet, daß sie weiter Mittel zur Rückwärtsversetzung der beweglichen Faser um einige Zehntel Mikrometer aufweist, sobald sie stirnseitig mit der ortsfesten Faser in Berührung gekommen ist.

8. Maschine nach einem der Ansprüche 3 und 7, dadurch gekennzeichnet, daß die Mittel zur Rückwärtsversetzung der beweglichen Faser durch Befehle gesteuert werden, die im Mikroprozessor gespeichert sind.

9. Maschine nach einem der Ansprüche 1 bis 8, dadurch gekennzeichnet, daß die Trageplatte der beweglichen Faser am Ende eines Biegestabes befestigt ist, der im mittleren Teil mit einer Kugel aus sehr hartem Material versehen ist, an welcher Stempel mit piezoelektrischen Plättchen angreifen, welche den Biegestab vorspannen, von den Angaben der Fotodetektoren gesteuert werden und Druck auf die Kugel in senkrechter und waagerechter Richtung ausüben.

10. Maschine nach einem der Ansprüche 1 bis 9, dadurch gekennzeichnet, daß die Mittel zum Verschweißen der Faserenden Lichtbogenschweißelektroden aus Wolfram mit Platinbeschichtung aufweisen.

11. Maschine nach einem der Ansprüche 1 bis 10, dadurch gekennzeichnet, daß sie Mittel zur Vorwärmung der ausgerichteten, aber noch auf Abstand stehenden Faserenden aufweist, um die in Kontakt tretenden Enden zu polieren.

12. Maschine nach Anspruch 1, dadurch gekennzeichnet, daß sie ein optisches, jedem Fotodetektor zugeordnetes Lichtkondensorsystem (34A, 34B, Fig. 1) aufweist, das den Lichtstrahl (32, 33) auf den Detektor lenkt, welcher zur Erfassung der der Stellung einer der optischen Fasern in der waagerechten bzw. senkrechten Richtung bestimmt ist.

13. Maschine nach Anspruch 1, dadurch gekennzeichnet, daß sie eine einzige Lichtquelle (30) zur Beleuchtung der Enden der beiden optischen Fasern aufweist.

14. Maschine nach Anspruch 1, dadurch gekennzeichnet, daß jeder Fotodetektor zwei aneinander anliegende Hälften (12A, 12B, 13A, 13B) aufweist, von denen jede an einen Eingang eines elektrischen Komparators (15A, 15B) geschaltet ist, welcher die Justierung einer der Fasern steuert.

15. Maschine nach Anspruch 14, dadurch gekennzeichnet, daß jeder der elektronischen Komparatoren (15A, 15B) mit einem gemeinsamen elektronischen Komparator (15C) verbunden ist, welcher die Justierung der beiden Fasern steuert.

## Claims

1. An automatic machine for an end-to-end welding of optical fibers, comprising: a plate (1) for supporting a first fiber (2) referred to as «reference» fiber, a plate (5) for supporting a second fiber (6), referred to as «moving fiber» and equipped with means for causing translation in two directions, horizontal and vertical in a plane perpendicular to the axis of the fibers, means for motorized translation, parallel to the axis of the fibers, of the supporting plate of one of the fibers and means for mechanical translation of the other supporting plate, light sources (30, 31, fig. 2) for illuminating the ends (9, 11) of the fibers, means for detecting the spatial position of the ends of the fibers, control means for adjusting the positions of the moving fiber in the horizontal and vertical direction, and means for putting the ends of the fibers into end-to-end contact, characterized in that the detection means comprise a pair of photodetectors (12, 13) for picking up the position of the fibers in a horizontal direction, a pair of photodetectors (18, 19) for picking up the position of the fibers in a vertical direction, and electronic comparators (15, 21) at the output of the photodetectors for comparing the signals of the photodetectors of each pair, and that the control means (17, 23, 24) adjust the positions of the moving fiber in the horizontal and vertical direction according to the signals of each pair of photodetectors, and means being provided for welding the fiber ends by means of an electric arch.

2. A machine according to claim 1, characterized in that the means for detecting the fiber ends comprise an optical magnification system (34, fig. 2) for the object disposed at the other side of the fibers relative to the light sources (30, 31), and photodetectors (12, 13) disposed at the image points of the optical fibers beyond the magnification device, which is common to both of them.

3. A machine according to claims 1 or 2, characterized in that the electronic comparators are connected to the control means by the intermediary of a microprocessor (17).

4. A machine according to one of claims 1 to 3, characterized in that the comparators operate light-emitting diodes.

5. A machine according to one of claims 1 to 4, characterized in that the means for putting the fiber ends into end-to-end contact are linked to the plate for supporting the moving fiber.

6. A machine according to one of claims 1 to 5, characterized in that the means for putting into contact the fiber ends are constituted by a high-resolution stepper motor.

7. A machine according to one of claims 1 to 6, characterized in that it further comprises means for backing off the moving fiber by a few tenths of a micrometer after end-to-end contact is established between the fibers.

8. A machine according to claims 3 and 7, characterized in that the means for backing off the moving fiber are controlled by an instruction stored in the microprocessor.

9. A machine according to one of claims 1 to 8, characterized in that the plate supporting the moving fiber is fixed to the end of a deflection bar which is provided at an intermediate point with a bead of very hard material, upon which impact wedges provided with piezoelectric blades, these wedges prestressing the deflection bar, being controlled by the signals of the photodetectors and exerting pressure upon the bead in the vertical and horizontal directions.

10. A machine according to one of claims 1 to 9, characterized in that the means for welding the ends of the fibers comprise electric arc welding electrodes made of platinum plated tungsten.

11. A machine according to one of claims 1 to 10, characterized in that it includes means for preheating the ends of the aligned fibers while not in end-to-end contact, in order to polish their ends faces prior to welding.

12. A machine according to claim 1, characterized in that it comprises an optical light condenser system (34A, 34B, fig. 1) associated with each photodetector for directing the light beam (32, 33) upon it, the photodetector detecting the position of one of the optical fibers in one of the horizontal and vertical directions respectively.

13. A machine according to claim 1, characterized in that it includes a single light source (30) illuminating the ends of the optical fibers.

14. A machine according to claim 1, characterized in that each photodetector comprises two halves attached to each other (12A, 12B, 13A, 13B), each half being connected to the input of an electronic comparator (15A, 15B) which controls the adjustment of the position of one of the fibers.

15. A machine according to claim 14, characterized in that each of the electronic comparators (15A, 15B) is preferably connected to a common electronic comparator (15C) controlling the adjustment of the position of the two optical fibers.

FIG.1

FIG.2

# FIG. 3

# FIG.4

FIG. 5

# FIG.6